# EUROPEAN PATENT APPLICATION

(11) **EP 1 865 267 A1**
(43) Date of publication of application: **12.12.2007**
(21) Application number: 07075404.9
(22) Date of filing: 29.05.2007
(51) Int. Cl.: F24D 3/16

(54) **Floor construction**

(30) Priority: 08.06.2006 NL 1031967
(71) Applicant: TECHNISCHE UNIVERSITEIT EINDHOVEN, 5612 AZ Eindhoven (NL)
(72) Inventor: Lichtenberg, Josephus Joannes Norbertus, 6077 CV St. Odiliënberg (NL); Van Haren, Leonardus Christianus Maria, 5443 AJ Haps (NL); Cox, Marcus Guillaume Dorothea Maria, 6042 NZ Roermond (NL)
(74) Representative: Valkonet, Rutger

(57) **Abstract**

The invention relates to a floor construction to be placed on a subfloor of a room, which floor construction at least comprises at least two spaced-apart sections, which are to be placed on said subfloor, and at least one floor element, which is supported on said sections with opposite edges thereof.

The object of the invention is to provide an application for such a floor construction, which, in addition to being easy to assemble and disassemble, effects an improved thermal management in the room. According to the invention, in order to accomplish that object, at least one pipe extending over at least part of the section is provided between the section and the floor element supported thereon for passing a medium therethrough for cooling or heating the room.

## Description

The invention relates to a floor construction to be placed on a subfloor of a room, which floor construction at least comprises at least two spaced-apart sections, which are to be placed on said subfloor, and at least one floor element, which is supported on said sections with opposite edges thereof.

Such a floor construction is disclosed in Dutch patent publication No. 1004128. The object of the invention is to provide an application for such a floor construction, which, in addition to being easy to assemble and disassemble, effects an improved thermal management in the room. According to the invention, in order to accomplish that object, at least one pipe extending over at least part of the section is provided between the section and the floor element supported thereon for passing a medium therethrough for cooling or heating the room.

In one embodiment, an insulation element is provided between the section and the floor element along the length of said section, on which insulation element said at least one pipe is to be placed. In this way an improved thermal management is realised by the insulation under the floor construction.

The insulation element may be provided with at least one slot, in which said at least one pipe can be placed, which at least one slot may furthermore have an internal dimension that corresponds to the external dimension of said at least one pipe.

Furthermore, in order to obtain a better heat exchange with the environment in the room, the floor element may be provided with a layer made of a thermally conductive material, which can be brought into thermal contact with said at least one pipe.

More specifically, in order to effect an adequate heat transfer, said layer is provided with a contact flange that is to mate with the pipe, which contact flange may furthermore at least in part have a dimension that corresponds to the external dimension of said at least one pipe.

In another functional embodiment, the floor element furthermore comprises a support plate connected to said layer. Said support plate functions to support the floor element for bridging the span between the sections extending beside each other. The support plate may be provided on the side of the layer that faces towards the subfloor or on the side that faces away from the subfloor.

In another functional embodiment the insulation element has a width smaller than that of the section. The layer may be supported on the insulation element with its end edges and the support plate may be supported on the section with its end edges.

To obtain an improved construction as well as a functional sound insulation, a damping material may furthermore be provided between the end edge of the support plate and the section.

In another functional embodiment, the insulation element has a width at least equal to the width of the section.

The invention will now be explained in more detail with reference to a drawing, and in which:
Figures 1 a and 1b are views of a first embodiment of a floor construction according to the invention;
Figures 2a and 2b are views of a second embodiment of a floor construction according to the invention;
Figure 3 shows another embodiment of a floor construction according to the invention.

For a better understanding of the invention, like parts will be indicated by identical numerals in the description of the figures below.

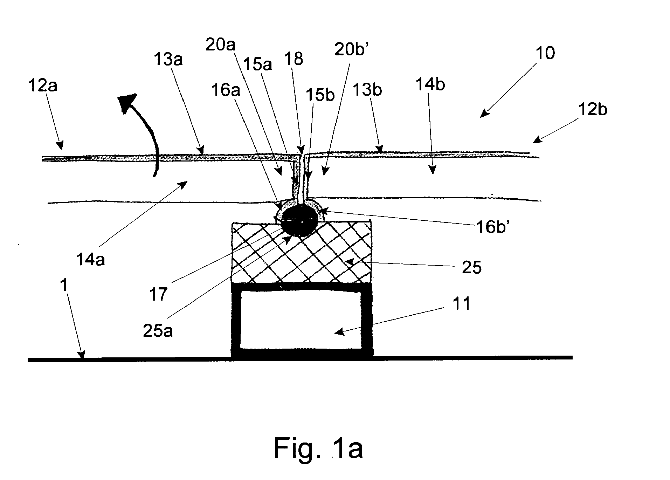

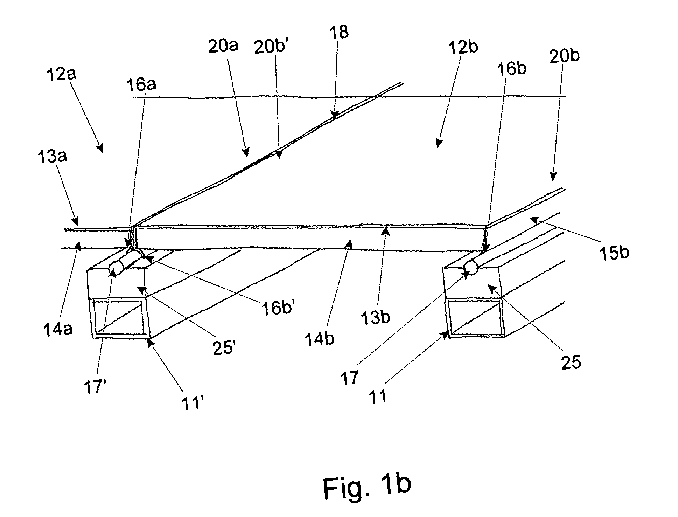

Figure 1a is a sectional view of a first embodiment of a floor construction according to the invention. The floor construction 10 is built up of sections 11, which are placed some distance apart (see figure 1 b) on a subfloor 1. The subfloor 1 may be any (flexible) load-bearing floor, such as the floor from the aforesaid Dutch patent publication No. 1004128, a wing slab floor, a star frame floor, etc. The successive sections are indicated 11 and 11', respectively.

Floor elements are arranged over the sections 11-11' extending beside one another and parallel to each other, which floor elements are successively indicated 12a and 12b (see figure 1 b). Each floor element 12a-12b is supported with its opposing edges 20a-20a' (20b-20b') on a respective section 11-11', and more in particular on an insulation element 25-25' provided on each section 11-11'.

Provided between the floor element 12b (12a) and each section 11 (11') is at least one pipe 17 (17') extending along at least part of the length of said section for passing a medium therethrough for cooling or heating the room above the floor construction.

To obtain an improved thermal management, an insulation element 25-25' extending along the length of the section 11-11' is provided between the section 11 (11') and each floor element 12b, (12a), on which insulation element the pipe 17-17' is supported.

To obtain a good thermal management and a good mechanical retainment of the pipe 17-17', the insulation element 25-25' is provided with a recess 25a-25a', in which the pipe 17-17' can be placed. In this way it is possible to effect an adequate form-locked retainment of the pipe 17 in the insulation element. Said recess 25a-25a' may have an internal dimension that corresponds to the external dimension of the pipe 17-17'.

In the embodiment that is shown in figures 1 a and 1b, the floor element 12a-12b is provided with a layer 13b-13a, which is configured as a top sheet made of a thermally conductive material, for example aluminium, in this embodiment. In another embodiment the layer 13b-13a may be configured as a thin foil layer. Said thermally conductive layer 13b-13a can be brought into thermal contact with the pipe 17, because the layer 13b-13a is provided with a flanged edge 15b-15a having a specifically shaped flange edge 16b'-16a. Said contact flange 16b', 16a is dimensioned to conform to the external dimension of the pipe 17. In this way a good thermal connection between the layer and the pipe 17 can be realised, resulting in a good heat exchange with the environment.

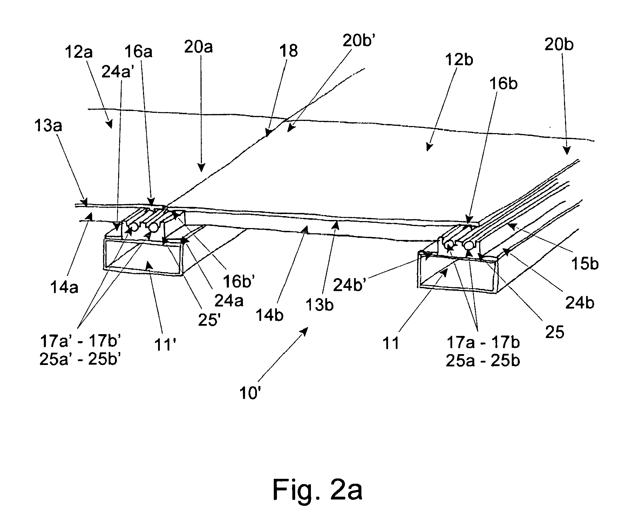

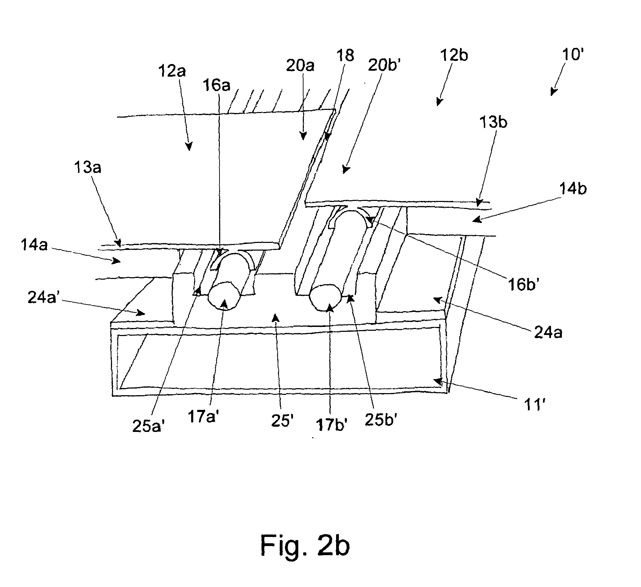

As is clearly shown in figures 1a-1b, but also in figures 2a and 2b, the floor element 12b-12a furthermore comprises a support plate 14b-14a, which is directed towards the subfloor 1 and which is connected to the respective layer 13b-13a. Said support plate functions to realise a certain stiffness or strength so as to enable the floor element 12b-12a to bridge the span between the sections 11-11'.

To prevent radiation of heat towards the subfloor 1 (heat loss), the support plate 14a-14b may also have an insulating function.

As is clearly shown in the embodiment of figures 1 a and 1b, the width of the support plate 14b-14a is the same as the width of the floor element 12b-12a, and the insulation element 25 has a width equal to the width of the section 11. It is also possible, however, to use an insulation element 25 having a width greater than that of the section, which insulation element will closely surround the section for a good insulating effect in that case.

The two floor elements 12b-12a are placed on the section 11-11' in such a manner that the layers 13b-13a are arranged over the pipe 17' with the flange 16b'-16a of their flanged end edges, in such a manner that as to be in thermal contact therewith, with a narrow gap 18 being present between the two floor elements 12b-12a.

As shown in the embodiments of figures 2a and 2b, the insulation element 25-25' has a width smaller than that of the respective section 11-11'.

Furthermore, and as clearly shown in figure 2b, the insulation element 25-25' is provided with two recesses 25a-25b and 25a'-25b', respectively, in which a pipe 17a-17b and 17a'-17b', respectively, can be placed. In addition to obtaining a simpler construction, it is also possible to realise a higher efficiency with the embodiment shown in figures 2a and 2b as a result of the doubled capacity made possible by the use of the pipes 17a-17b and 17a'-17b', respectively. The fact is that cooled or heated water can be passed through the pipes for cooling or heating the rooms above the floor construction.

Since the insulation element 25-25' of the embodiment is shown in figures 2a and 2b has a width smaller than that of the section 11-11', the floor element 12b-12a can be directly supported on the section 11-11' with the support plate 14b-14a. To that end the support plate 14b-14a must have a width smaller than that of the layer 13b-13a, which is supported on the respective pipe 17a-17b', 17a'-17b via the respective flange 16b-16b', 16a-16a'.

To obtain a sound mechanical and vibration-three support of each floor element 12b-12a, a damping material 24a-24a' (24b-24b') may be provided on the part of the section 11-11' that is still free, on which material the support plate 14b-14a rests with its edges.

The essence of the present invention is that because of the good direct thermal contact between the layer of 13a-13b with the pipes 17a '-17b (17a-17b) as shown in figures 2a and 2b, or with the pipes 17-17 ' as shown in figures 1a and 1b, a good thermal conduction is effected between the environment above the layer and the pipe, through which a cooling medium or a heating medium (cooled water or heated water) can be passed.

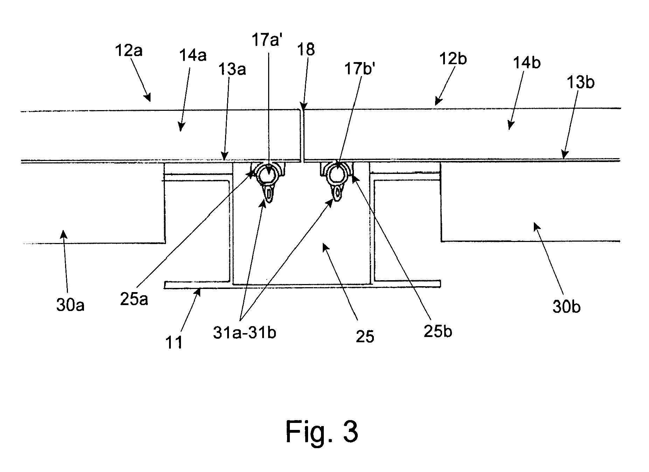

Figure 3 further shows an alternative embodiment of a floor construction according to the invention in which, in order to realise a good thermal contact between the pipe 17a'-17b' and the layer 13a-13b, the pipes 17a' and 17b' are accommodated in the recesses 25a-25b, with the pipes being supported on an elastic element 31a-31b. Said elastic element 31a-31b pushes the pipes 17a-17b present in the recess 25a-25b upwards against the respective layer 13a-13b (or against the flange 16a-16b as shown in figure 2a). In this way a good thermal contact is realised, which is conducive to obtaining an adequate supply or discharge of heat.

As shown in Figure 3, the support plates 14b-14a configured as a finishing layer are provided on the layers 13b-13a, which support plates, in addition to a heat-distributing function, also have a constructional function. Optionally, insulation element 30a-30b may be provided under the layers 13b-13b so as to prevent possible heat loss in the direction of the subfloor 1.

In this way it is possible to control and to influence the thermal management in the room in an effective and especially inexpensive manner. The advantage of the present floor construction is, moreover, that it is easy to assemble and to extend, but that it is also very easy to disassemble again, since all parts are geared to fit together in a form-locked manner without the use of fixing means being required.

According to the invention, an improved floor construction is realised which forms a functional combination between flexibility on the one hand, because the construction is easy to assemble and disassemble and the floor elements are easy to remove, and an effective influencing of the thermal management on the other hand, either by heating or by cooling, without this having a negative effect as regards the heating/cooling medium that is used.

## Claims

1. A floor construction to be placed on a subfloor of a room, at least comprising
at least two spaced-apart sections, which are to be placed on said subfloor, and
at least one floor element, which is supported on said sections with opposite edges thereof, **characterised in that** at least one pipe extending over at least part of the section is provided between the section and the floor element supported thereon for passing a medium therethrough for cooling or heating the room.

2. A floor construction according to claim 1, **characterised in that** an insulation element is provided between the section and the floor element along the length of said section, on which insulation element said at least one pipe is to be placed.

3. A floor construction according to claim 1 or 2, **characterised in that** said insulation element is provided with at least one slot, in which said at least one pipe can be placed.

4. A floor construction according to claim 3, **characterised in that** said at least one slot has an internal dimension that corresponds to the external dimension of said at least one pipe.

5. A floor construction according to claim 3 or 4, **characterised in that** said at least one pipe can be supported on an elastic element in said slot.

6. A floor construction according to any one or more of the preceding claims, **characterised in that** the floor element is provided with a layer made of a thermally conductive material, which can be brought into thermal contact with said at least one pipe.

7. A floor construction according to claim 6, **characterised in that** said layer is provided with a contact flange that is to mate with the pipe.

8. A floor construction according to claim 7, **characterised in that** said contact flange may furthermore at least in part have a dimension that corresponds to the external dimension of said at least one pipe.

9. A floor construction according to claim 6-8, **characterised in that** the floor element furthermore comprises a support plate connected to said layer.

10. A floor construction according to claim 9, **characterised in that** the support plate is provided on the side of the layer that faces towards the subfloor.

11. A floor construction according to claim 9 or 10, **characterised in that** the insulation element has a width smaller than that of the section.

12. A floor construction according to claim 11, **characterised in that** the layer is supported on the insulation element with its end edges and the support plate is supported on the section with its end edges.

13. A floor construction according to claim 12, **characterised in that** a damping material is provided between the end edge of the support plate and the section.

14. A floor construction according to claim 1-10, **characterised in that** the insulation element has a width at least equal to the width of the section.
